# FASCICULE DE BREVET EUROPEEN

(11) **EP 3 365 188 B1**
(45) Date de publication et mention de la délivrance du brevet: **07.08.2019**
(21) Numéro de dépôt: 16779052.6
(22) Date de dépôt: 06.10.2016
(51) Int. Cl.: B60C 11/00, B60C 11/13

(54) **PNEUMATIQUE AVEC BANDE DE ROULEMENT COMPORTANT DES SECTEURS RENFORCÉS ET DES GORGES AUTO-ENTRETENUES**
REIFEN MIT EINER LAUFFLÄCHE MIT VERSTÄRKTEN SEKTOREN UND SELBSTTRAGENDEN KANÄLEN
TYRE WITH A TREAD HAVING REINFORCED SECTORS AND SELF-SUPPORTING CHANNELS

(30) Priorité: 20.10.2015 FR 1559980
(43) Date de publication de la demande: 29.08.2018
(73) Titulaire: Compagnie Générale des Etablissements Michelin, 63000 Clermont-Ferrand (FR)
(72) Inventeur: PALLOT, Patrick, 63040 Clermont-Ferrand Cedex 9 (FR); DAVAL, Bertrand, 63040 Clermont-Ferrand Cedex 9 (FR); LEVRARD, Benjamin, 63040 Clermont-Ferrand Cedex 9 (FR)
(74) Mandataire: Bauvir, Jacques
(86) Numéro de dépôt international: PCT/EP2016/073837
(87) Numéro de publication internationale: WO 2017/067789

(56) Documents cités:
- WO-A1-2005/030503
- GB-A- 357 419
- JP-A- H0 834 205

## Description

### Domaine de l'invention

La présente invention est relative aux pneumatiques, et plus particulièrement à un pneumatique dont les performances d'adhérence sont améliorées.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan médian est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan médian du pneumatique, selon la direction axiale ».

### État de la technique

De manière connue, la bande de roulement d'un pneumatique est pourvue d'une sculpture comprenant notamment des blocs de sculpture délimités par diverses rainures principales, longitudinales ou circonférentielles, axiales ou encore obliques, les blocs élémentaires pouvant en outre comporter diverses incisions ou lamelles plus fines. Les rainures constituent des canaux destinés à évacuer l'eau lors d'un roulage sur sol mouillé ; les parois de ces rainures définissent également les bords des blocs de sculptures ; en fonction de l'orientation des forces auxquelles est soumis un pneumatique en roulage, on parle de bord d'attaque d'un bloc de sculpture lorsque la force est orientée vers le centre du bloc, le bord de fuite d'un bloc de sculpture étant le bord opposé.

Pour améliorer l'adhérence d'un pneumatique, et plus particulièrement pour l'adhérence sur sol sec et sur sol humide, il est bien connu de diminuer la rigidité ou la dureté du mélange caoutchouteux constituant de la bande de roulement. Cette diminution de rigidité de la bande de roulement permet à celle-ci de mieux épouser la surface rugueuse du sol de roulage et ainsi la surface réelle de contact avec le sol de roulage est augmentée et la performance d'adhérence améliorée par rapport à une bande de roulement dont le mélange caoutchouteux est plus rigide.

Cependant, l'utilisation d'un mélange caoutchouteux de bande de roulement moins rigide favorise les déformations des rainures de sculptures, ce qui peut dégrader leur aptitude à évacuer l'eau.

Pour améliorer la performance de drainage des pneumatiques en stabilisant les blocs de sculpture, le document EP 1 708 896 B1 propose un pneumatique dont les rainures sont bordées de mélange de caoutchouc plus rigide que le mélange de coutchouc constituant majoritairement la bande de roulement. Cependant, alors que le mélange rigide est, en proportion, faiblement présent par rapport au mélange de caoutchouc relativement mou qui lui est destiné à favoriser l'adhérence, on a constaté que même si la proportion de mélange rigide dans la surface de contact du pneumatique est modeste, on note tout de même une dégradation significative de l'adhérence, dans des conditions de freinage ou sous fortes accélérations axiales, ce qui ruine l'usage de mélange de caoutchouc intrinsinquement très adhérent. Un autre exemple comparable est proposé dans le document WO2005/030503, ce qui selon ce document permettrait d'obtenir une rigidité de dérive stable avec l'usure du pneumatique. Un autre exemple comparable est proposé dans le document JP H 0834205 ou encore dans le document GB 357419.

### Description brève de l'invention

L'invention a pour objet un pneumatique comprenant :
- deux bourrelets et deux flancs reliés aux bourrelets ;
- un sommet, le sommet ayant un premier côté relié à l'extrémité radialement extérieure de l'un des deux flancs et ayant un deuxième côté relié à l'extrémité radialement extérieure de l'autre des deux flancs, le sommet comportant une bande de roulement radialement extérieure, la bande de roulement comprenant :
   ▪ au moins un premier secteur s'étendant axialement sur une partie de la largeur totale de la bande de roulement, s'étendant circonférentiellement sur toute la circonférence du pneumatique, et s'étendant radialement jusqu'à une face de contact de premier secteur destinée à venir en contact avec la chaussée pendant le roulage du pneumatique, ledit premier secteur étant constitué essentiellement en un matériau de base ;
   ▪ au moins un second secteur s'étendant axialement sur une partie de la largeur totale de la bande de roulement, s'étendant circonférentiellement sur toute la circonférence du pneumatique, et s'étendant radialement jusqu'à une face de contact de second secteur destinée à venir en contact avec la chaussée pendant le roulage du pneumatique, ledit second secteur étant constitué essentiellement en un matériau de renforcement, dont le module dynamique de cisaillement G* est au moins deux fois supérieur au module dynamique de cisaillement G* du matériau de base ;
   ▪ une pluralité de rainures aménagées à partir de l'une desdites faces de contact destinées à venir en contact avec la chaussée pendant le roulage du pneumatique, chaque rainure ayant des flancs de rainure et un fond de rainure, chaque rainure ayant une profondeur P mesurée selon une direction radiale entre le fond et ladite face de contact ;
caractérisé en ce que, sur le second secteur ou sur l'un des seconds secteurs au moins, la face de contact de second secteur comporte une gorge ayant une profondeur p inférieure à 2 mm.

Ainsi, on parvient à réconcilier l'utilisation d'un mélange de caoutchouc assez mou pour être très adhérent, lequel est disposé dans des premiers secteurs très majoritairement sur la largeur axiale du pneumatique, avec l'implantation dans un ou des seconds secteurs, de mélange rigide de renforcement. En effet, à même hauteur entre le matériau de base et le matériau rigide de renforcement, la charge portée, donc la pression entre la bande de roulement et le sol, est fonction des rigidités en compression des deux matériaux. Si le matériau de renforcement est 10 fois plus rigide que le matériau de base de la bande de roulement, la pression locale à l'écrasement, sous le matériau renforcé, est 10 fois plus importante que la pression sur le reste de la bande de roulement. Le niveau d'adhérence est alors lié à l'adhérence de chaque matériau pondéré par sa fraction surfacique en contact et de la pression appliquée sur chaque matériau. Les inventeurs ont ainsi constaté que plus le matériau rigide de renforcement est rigide (et a fortiori plus il est présent en surface), plus il pénalise l'adhérence à neuf du pneumatique, et ceci dans une proportion supérieure à sa proportion de présence à la surface de contact de la bande de roulement. En outre, circonstance aggravante, lorsqu'on utilise des matériaux de rigidités différentes, le retrait thermique après vulcanisation du pneumatique est différent, ce qui aboutit à ce que le matériau rigide de renforcement fasse protubérance à la surface du pneumatique par rapport au matériau de base.

Suivant un aspect de l'invention, la gorge, qui forme un ressaut, c'est-à-dire une rainure très peu profonde, permet d'obtenir ce que l'on peut appeler une « nervure sacrifiée ». Cette nervure est sacrifiée au sens où, par conception, elle va glisser à la surface de la route en usage normal, ce qui va entretenir ledit ressaut par une usure permanente du pneumatique à cet endroit. Pour d'autres informations sur la disposition constructive «nervure sacrifiée », le lecteur peut se reporter au brevet US 4,480,671 qui montre une telle nervure sacrifiée [voir nervure latérale 8] proposée dans un tout autre but. L'homme du métier sait que la différence entre le rayon de roulement dans le ou les premiers secteurs et le rayon de roulement au droit de la gorge du ou des seconds secteurs peut s'auto-entretenir au cours de l'usure du pneu en service normal.

### Description des Figures

Les objets de l'invention sont maintenant décrits à l'aide du dessin annexé dans lequel :
- la figure 1 représente de manière très schématique (sans respect d'une échelle spécifique), une coupe méridienne d'un pneumatique conforme à un mode de réalisation de l'invention ;
- les figures 2 à 5 présentent en coupe méridienne partielle des bandes de roulement de pneumatiques conformes à différents modes de réalisation de l'invention.

### Description détaillée de l'invention

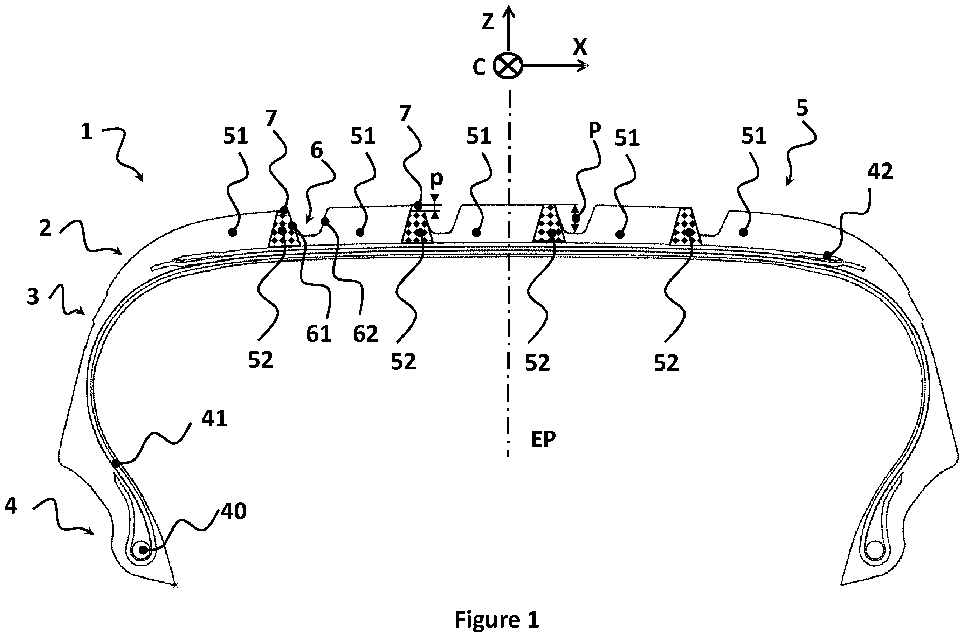

On voit à la figure 1 un pneumatique 1 comprenant deux flancs 3 reliés chacun à un bourrelet 4. Le pneumatique comporte un sommet 2 ; le sommet 2 est relié de chaque côté à l'extrémité radialement extérieure de chacun des deux flancs. Le sommet 2 comporte une bande de roulement 5. La figure 1 montre un plan équatorial EP, plan perpendiculaire à l'axe de rotation du pneumatique, situé à mi-distance des deux bourrelets 4 (montés sur jante) et passant par le milieu de l'armature de ceinture ; la figure 1 indique aussi, par des flèches disposées juste au-dessus de la bande de roulement 5, sur le plan équatorial EP, les directions axiale X, circonférentielle C et radiale Z.

Chaque bourrelet comporte une tringle 40. Une nappe de carcasse 41 est enroulée autour de chaque tringle 40. La nappe de carcasse 41 est radiale et est, de manière connue en soi, constituée par des câbles ; dans ce cas de mise en oeuvre, il s'agit de câbles textiles ; ces câbles sont disposés sensiblement parallèlement les uns aux autres et s'étendent d'un bourrelet à l'autre de façon telle qu'ils forment un angle compris entre 80° et 90° avec le plan équatorial EP.

La bande de roulement 5 est contituée essentiellement par une pluralité de premiers secteurs 51 et une pluralité de seconds secteurs 52. Chaque premier secteur s'étend axialement sur une partie de la largeur totale de la bande de roulement, et s'étendant radialement jusqu'à une face de contact de second secteur, destinée à venir en contact avec la chaussée pendant le roulage du pneumatique. Le cumul, en largeur mesurée axialement, des premiers secteurs s'étend sur la majorité de la largeur axiale de la bande de roulement. Chaque premier secteur est constitué essentiellement en un matériau de base, de type très adhérent.

Chaque second secteur 52 s'étend axialement sur une petite fraction de la largeur totale de la bande de roulement ; il s'étend radialement jusqu'à une face de contact de second secteur, elle aussi destinée à venir en contact avec la chaussée pendant le roulage du pneumatique. On voit que chaque second secteur est conformé en coin, dont la base est proche de la structure de renforcement du pneumatique (laquelle structure de renforcement comporte de façon connue en soi, par exemple, une carcasse 41 et une ceinture 42), et dont la largeur diminue progressivement au fur et à mesure que l'on s'approche de la surface de la bande de roulement. Chaque second secteur est constitué essentiellement en un matériau rigide de renforcement, nettement plus rigide que le matériau de base.

Les premiers et seconds secteurs 51 et 52 forment des blocs de sculpture. Deux blocs de sculpture axialement adjacents sont séparés par une rainure 6. Chaque rainure s'étend au moins en partie circonférentiellement est est délimitée axialement par des flancs 61 et 62 de rainure. Chaque rainure 6 a une profondeur P mesurée selon une direction radiale entre le fond de la rainure et la face de contact de la bande de roulement avec le sol. Chaque second secteur est, vu en coupe méridienne, conformé en coin ; lors d'un roulage rapide en virage, chaque second secteur s'oppose, par sa forte raideur en compression et en cisaillement (comparativement aux premiers secteurs), au cisaillement et au basculement des blocs de sculpture ; cela permet ainsi de conserver une surface de contact avec le sol de roulage importante, gage de meilleure adhérence, et cela permet de limiter les surpressions sur le bord d'attaque des rainures et ainsi de limiter les échauffements. De préférence, le matériau rigide de renforcement est apparent sur au moins l'un des flancs 61 de rainures 6.

Suivant l'invention, au moins un second secteur, par exemple celui ou ceux le plus sollicité(s) en cas de forte accélération axiale imposée au pneumatique ou celui le plus chargé lors d'un freinage d'urgence, comporte une gorge 7 de profondeur radiale très faible par rapport à la profondeur de sculpture ; suivant un mode de réalisation avantageux de l'invention, la gorge 7 ayant une profondeur p inférieure à 2 mm. Cela permet d'obtenir un ressaut qui soit assez proche de l'état d'équilibre des cinétiques d'usure des matériaux, telles que le pneumatique le rencontrera dans toute sa durée d'usage. Chaque gorge 7 s'étend au moins en partie circonférentiellement, suivant en cela l'orientation des seconds secteurs.

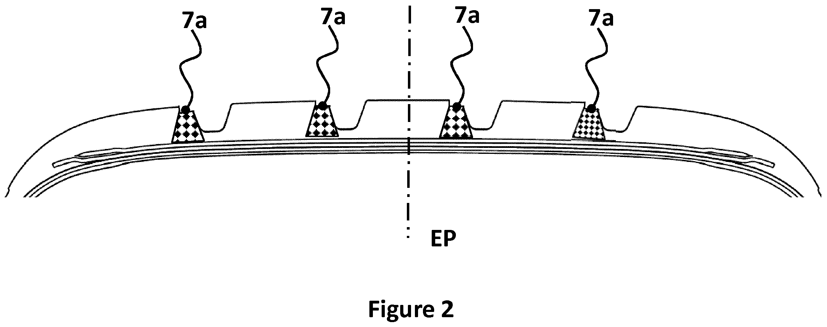

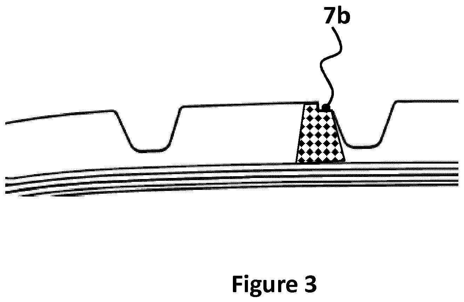

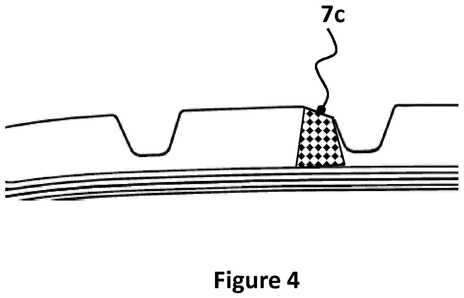

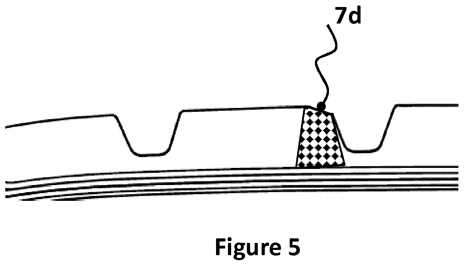

Evoquons différentes variantes de réalisations. On voit à la figure 2 que les gorges 7a sont présentes sur la totalité des seconds secteurs. A la figure 3, on voit que la gorge 7b ne couvre qu'une partie de la largeur axiale du second secteur, et non pas la totalité de la largeur axaile de celui-ci. Les gorges peuvent être de profondeurs différentes d'un second secteur à l'autre. A la figure 4, on voit que la gorge 7c à un profil incliné par rapport à l'axe du pneumatique, et à la figure 5, on voit que la gorge 7d a un profil arrondi et incliné par rapport à l'axe du pneumatique. La gorge pourrait avoir un profil en escalier ou autre ou une combinaison de différentes formes. En d'autres termes, on voit que la gorge a une profondeur p croissante en allant axialement d'un ou des premiers secteurs vers un ou les seconds secteurs. En variante, la gorge peut être présente sur une partie seulement de la largeur axiale de la face des seconds secteurs. En variante encore, la gorge s'étend axialement sur la totalité de la largeur axiale des seconds secteurs et sur une faible partie des premiers secteurs.

Quant aux dimensions, la profondeur p de la dépouille est de préférence de 0,1 mm à 1,5 mm, et préférentiellement de 0,2 mm à 0,8 mm.

De préférence, le matériau constitutif de la bande de roulement 5 est un matériau élastomérique de module dynamique de cisaillement G*, à 60°C et sous une contrainte alternée à 10 Hz de 0,7 MPa, inférieur à 1,25 MPa. On entend par « matériau constitutif de la bande de roulement » le matériau qui comprend au moins 50% du volume compris entre la surface de contact avec le sol à l'état neuf et un niveau correspondant à 1,6 mm au-dessus du fond 70 de gorge 7 (1,6 mm étant la hauteur habituelle des témoins d'usure).

Pour la réalisation d'un matériau élastomérique constitutif de la bande de roulement 5 ayant un module dynamique de cisaillement G* valant 0,9MPa, on peut se reporter par exemple à la formulation ci-dessous :

**Tableau 1 : formulation**

| Constituant | pce |
|---|---|
| SBR (a) | **100** |
| Silice (b) | **110** |
| Agent de couplage (c) | **9** |
| Plastifiant liquide (d) | **20** |
| Plastifiant résine (e) | **50** |
| Noir | **5** |
| Oxyde de zinc | **3** |
| Acide stéarique | **2** |
| Antioxydant (f) | **2** |
| Accélérateur (g) | **2** |
| DPG | **2** |
| Soufre | **1** |

| | |
|---|---|
| avec: (a) SBR avec 27% styrène, butadiène -1,2 :5%, cis-1,4 :15%, trans -1,4: 80% Tg -48°C (b) Silice « Zeosill 165MP » de la société Solvay de surface BET 160m²/g (c) Silane TESPT « SI69 » de la société Evonik (d) Huile TDAE « Flexon 630 » de la société Shell (e) Résine « Escorez 2173 » de la société Exxon (f) Antioxydant « Santoflex 6PPD » de la société Solutia (g) Accélérateur « Santocure CBS » de la société Solutia | |

**Tableau 2: Propriétés mécaniques de la composition après vulcanisation**

| Propriété | valeur |
|---|---|
| Module G* (MPa) | **0,9** |
| Tg (°C) Tanδ max | **-10** |

D'une façon générale, le second secteur est constitué essentiellement en un matériau rigide de renforcement. Cela peut être un mélange élastomérique renforcé par des fibres, comme proposé dans le brevet US 2,710,042 B1 ou dans la demande de brevet US2010/0145948 A1 ou dans le brevet EP 0320215 B1. Cela peut être un mélange élastomérique de type rigide. De préférence, le matériau rigide de renforcement est à base d'un matériau élastomérique ayant un module dynamique de cisaillement G* mesuré à 60°C à 10 Hz et sous une contrainte de cisaillement alterné de 0,7 MPa supérieur à 20 MPa. On peut combiner les modes de réalisations cités ci-dessus.

Quant à sa forme du ou des seconds secteurs, elle peut être en coin : c'est l'exemple choisi pour expliciter l'invention. En alternative, le ou les seconds secteurs peuvent prendre la forme d'inserts de largeur axiale sensiblement constante formant une peau à la surface des rainures, comme proposé dans le brevet EP 1 701 854 B1. Quant à la position dans la bande de roulement, le mélange renforcé peut être disposé en paroi de rainure ou dans l'épaisseur des blocs de sculpture. Les seconds secteurs de renforcement peuvent être indépendants ou reliés par une base commune constituée du même matériau de renforcement sur tout ou partie de la largeur de la bande de roulement.

Le tableau 3 donne, à titre d'exemple, une formulation qui permet d'obtenir un mélange de rigidité élevée :

**Tableau 3**

| Constituant | C.1 (en pce) |
|---|---|
| NR (1) | 100 |
| Noir de carbone (2) | 70 |
| Résine Formophénolique (3) | 12 |
| ZnO (4) | 3 |
| Acide stéarique (5) | 2 |
| 6PPD (6) | 2,5 |
| HMT (7) | 4 |
| Soufre | 3 |
| CBS (8) | 2 |

| | |
|---|---|
| (1) Caoutchouc Naturel ; (2) Noir de carbone N326 (dénomination selon la norme ASTM D-1765) ; (3) Résine formophénolique novolac (« Peracit 4536K » de la société Perstorp) ; (4) Oxyde de zinc (grade industriel - société Umicore) ; (5) Stéarine (« Pristerene 4931 » de la société Uniqema) ; (6) N-1,3-diméthylbutyl-N-phénylparaphénylènediamine (Santoflex 6-PPD de la société Flexsys) ; (7) Hexaméthylènetétramine (de la société Degussa) ; (8) N-cyclohexyl-benzothiazyl sulphénamide(Santocure CBS de la société Flexsys). | |

Cette formulation permet d'obtenir des mélanges de rigidité élevée. Le module dynamique de cisaillement G* mesuré sous une contrainte de cisaillement alternée de 0,7 MPa à 10 Hz et 60 degrés Celsius est de 30,3 MPa.

### Essais

Le pneumatique de référence T est connu sous la dénomination commerciale Primacy 3 en 225/45 R 17 gonflé à 2,4 bars. Le test est un test de freinage sur sol mouillé avec une hauteur d'eau de 1 mm. La distance de freinage est mesurée entre 80 et 10 km/h. La variante V1 est un pneumatique de même dimension que le témoin, avec la même architecture mais avec une bande de roulement dont le matériau a un module dynamique de cisaillement G* de 0,9 MPa (mesuré à 10Hz sous une contrainte alternée de 0,7 MPa). Cette variante comporte une sculpture à cinq nervures séparées par quatre rainures (taux d'entaillement de 20%) et des angles de dépouille de 5° sans entaille axiale avec des seconds secteurs en forme de coins en mélange rigide dont la formule est donnée ci-dessus, disposés comme montré à la figure 2, sauf qu'il n'y a pas de gorge. La variante V2 est conforme à la figure 2, avec des gorges de 0,2 mm de profondeur p.

| Performance (en %) | **Freinage sol mouillé 80 - 10 km/h** |
|---|---|
| **Pneumatique T** | ***100*** |
| **Variante 1** | ***127*** |
| **Variante 2** | ***132*** |

On constate un gain de 5 points en distance de freinage, gain significatif qui permet de tirer plus de profit de l'utilisation de matériau rigide de renforcement.

## Revendications

1. Pneumatique (1) ayant un axe de rotation et comprenant :
- deux bourrelets (2) et deux flancs (3) reliés aux bourrelets ;
- un sommet (4), le sommet ayant un premier côté relié à l'extrémité radialement extérieure de l'un des deux flancs et ayant un deuxième côté relié à l'extrémité radialement extérieure de l'autre des deux flancs, le sommet comportant une bande de roulement (5) radialement extérieure, la bande de roulement comprenant :
o au moins un premier secteur (51) s'étendant axialement sur une partie de la largeur totale de la bande de roulement, s'étendant circonférentiellement sur toute la circonférence du pneumatique, et s'étendant radialement jusqu'à une face de contact de premier secteur destinée à venir en contact avec la chaussée pendant le roulage du pneumatique, ledit premier secteur étant constitué essentiellement en un matériau de base ;
o au moins un second secteur (52) s'étendant axialement sur une partie de la largeur totale de la bande de roulement, s'étendant circonférentiellement sur toute la circonférence du pneumatique, et s'étendant radialement jusqu'à une face de contact de second secteur destinée à venir en contact avec la chaussée pendant le roulage du pneumatique, ledit second secteur étant constitué essentiellement en un matériau rigide de renforcement, dont le module dynamique de cisaillement G* est au moins deux fois supérieur au module dynamique de cisaillement G* du matériau de base ;
o une pluralité de rainures (6) aménagées à partir de l'une desdites faces de contact destinées à venir en contact avec la chaussée pendant le roulage du pneumatique, chaque rainure ayant des flancs de rainure et un fond de rainure, chaque rainure ayant une profondeur P mesurée selon une direction radiale entre le fond et ladite face de contact ;
**caractérisé en ce que,** sur le second secteur ou sur l'un des seconds secteurs au moins, la face de contact de second secteur comporte une gorge (7) ayant une profondeur p inférieure à 2 mm.

2. Pneumatique selon la revendication 1, dans lequel l'ensemble des seconds secteurs comporte une gorge ayant une profondeur p inférieure à 2 mm.

3. Pneumatique selon la revendication 1, dans lequel la gorge est de profondeur p comprise entre 0,1 mm et 1,5 mm.

4. Pneumatique selon la revendication 1, dans lequel la gorge est de profondeur p comprise entre 0,2 mm et 0,8 mm.

5. Pneumatique selon l'une des revendications 1 à 4, dans lequel les gorges ont des profondeur p différentes entre un secteur et un autre.

6. Pneumatique selon l'une des revendications 1 à 5, dans lequel la gorge a un profil incliné par rapport à l'axe de rotation du pneumatique.

7. Pneumatique selon l'une des revendications 1 à 5, dans lequel la gorge a un profil courbe.

8. Pneumatique selon l'une des revendications 1 à 5, dans lequel la gorge a un profil en escalier.

9. Pneumatique selon l'une des revendications 1 à 8, dans lequel la gorge a une profondeur p croissante en allant axialement des premiers secteurs vers les seconds secteurs.

10. Pneumatique selon l'une des revendications 1 à 9, dans lequel la gorge est présente sur une partie seulement de la largeur axiale de la face des seconds secteurs.

11. Pneumatique selon l'une des revendications 1 à 9, dans lequel la gorge s'étend axialement sur la totalité de la largeur axiale des seconds secteurs et sur une faible partie des premiers secteurs.

12. Pneumatique selon l'une des revendications 1 à 11, dans lequel le matériau de renforcement est 10 fois plus rigide que le matériau de base de la bande de roulement.

13. Pneumatique selon l'une des revendications 1 à 11, dans lequel le matériau de base est à base d'un matériau élastomérique ayant un module dynamique de cisaillement G*, à 60°C et sous une contrainte alternée à 10 Hz de 0,7 MPa, inférieur à 1,25 MPa.

14. Pneumatique selon l'une des revendications 1 à 12, dans lequel le matériau rigide de renforcement est à base d'un matériau élastomérique ayant un module dynamique cisaillement G* mesuré à 60°C à 10 Hz et sous une contrainte de cisaillement alterné de 0,7 MPa supérieur à 20 MPa.

15. Pneumatique selon l'une des revendications 1 à 13, dans lequel le matériau rigide de renforcement est apparent sur au moins l'un des flancs de rainures.

## Patentansprüche

1. Luftreifen (1), der eine Drehachse hat und enthält:
- zwei Wülste (2) und zwei mit den Wülsten verbundene Flanken (3);
- einen Scheitelbereich (4), wobei eine erste Seite des Scheitelbereichs mit dem radial äußeren Ende einer der zwei Flanken verbunden ist und eine zweite Seite mit dem radial äußeren Ende der anderen der zwei Flanken verbunden ist, wobei der Scheitelbereich einen radial äußeren Laufstreifen (5) aufweist, wobei der Laufstreifen enthält:
o mindestens einen ersten Sektor (51), der sich axial über einen Teil der Gesamtbreite des Laufstreifens erstreckt, sich in Umfangsrichtung über den ganzen Umfang des Luftreifens erstreckt, und sich radial bis zu einer ersten Sektor-Kontaktseite erstreckt, die dazu bestimmt ist, während des Rollens des Luftreifens mit der Straße in Kontakt zu kommen, wobei der erste Sektor hauptsächlich aus einem Basismaterial besteht;
o mindestens einen zweiten Sektor (52), der sich axial über einen Teil der Gesamtbreite des Laufstreifens erstreckt, sich in Umfangsrichtung über den ganzen Umfang des Luftreifens erstreckt, und sich radial bis zu einer zweiten Sektor-Kontaktseite erstreckt, die dazu bestimmt ist, während des Rollens des Luftreifens mit der Straße in Kontakt zu kommen, wobei der zweite Sektor hauptsächlich aus einem steifen Verstärkungsmaterial besteht, dessen dynamischer Schermodul G* mindestens doppelt so groß ist wie der dynamische Schermodul G* des Basismaterials;
o eine Vielzahl von Rillen (6), die ausgehend von einer der Kontaktseiten ausgespart sind, die dazu bestimmt sind, während des Rollens des Luftreifens mit der Straße in Kontakt zu kommen, wobei jede Rille Rillenflanken und einen Rillenboden hat, wobei jede Rille eine Tiefe P gemessen gemäß einer radialen Richtung zwischen dem Boden und der Kontaktseite hat;
**dadurch gekennzeichnet, dass** im zweiten Sektor oder mindestens in einem der zweiten Sektoren die zweite Sektor-Kontaktseite eine Kehle (7) mit einer Tiefe p geringer als 2 mm aufweist.

2. Luftreifen nach Anspruch 1, wobei die Gesamtheit der zweiten Sektoren eine Kehle mit einer Tiefe p geringer als 2 mm hat.

3. Luftreifen nach Anspruch 1, wobei die Kehle eine Tiefe p zwischen 0,1 mm und 1,5 mm hat.

4. Luftreifen nach Anspruch 1, wobei die Kehle eine Tiefe p zwischen 0,2 mm und 0,8 mm hat.

5. Luftreifen nach einem der Ansprüche 1 bis 4, wobei die Kehlen zwischen einem Sektor und einem anderen unterschiedliche Tiefen p haben.

6. Luftreifen nach einem der Ansprüche 1 bis 5, wobei die Kehle ein geneigtes Profil bezüglich der Drehachse des Luftreifens hat.

7. Luftreifen nach einem der Ansprüche 1 bis 5, wobei die Kehle ein gekrümmtes Profil hat.

8. Luftreifen nach einem der Ansprüche 1 bis 5, wobei die Kehle ein treppenförmiges Profil hat.

9. Luftreifen nach einem der Ansprüche 1 bis 8, wobei die Kehle axial von den ersten Sektoren zu den zweiten Sektoren gehend eine zunehmende Tiefe p hat.

10. Luftreifen nach einem der Ansprüche 1 bis 9, wobei die Kehle nur in einem Teil der axialen Breite der Seite der zweiten Sektoren vorhanden ist.

11. Luftreifen nach einem der Ansprüche 1 bis 9, wobei die Kehle sich axial über die Gesamtheit der axialen Breite der zweiten Sektoren und über einen geringen Teil der ersten Sektoren erstreckt.

12. Luftreifen nach einem der Ansprüche 1 bis 11, wobei das Verstärkungsmaterial 10 Mal so steif ist wie das Basismaterial des Laufstreifens.

13. Luftreifen nach einem der Ansprüche 1 bis 11, wobei das Basismaterial auf der Basis eines Elastomermaterials ist, das einen dynamischen Schermodul G* bei 60°C und unter einer abwechselnden Beanspruchung bei 10Hz von 0,7 MPa geringer als 1,25 MPa hat.

14. Luftreifen nach einem der Ansprüche 1 bis 12, wobei das steife Verstärkungsmaterial auf der Basis eines Elastomermaterials ist, das einen dynamischen Schermodul G* gemessen bei 60°C bei 10Hz und unter einer abwechselnden Scherbeanspruchung von 0,7 MPa höher als 20 MPa hat.

15. Luftreifen nach einem der Ansprüche 1 bis 13, wobei das steife Verstärkungsmaterial auf mindestens einer der Flanken von Rillen sichtbar ist.

## Claims

1. Tyre (1) having an axis of rotation and comprising:
- two beads (2) and two sidewalls (3) connected to the beads;
- a crown (4), the crown having a first side connected to the radially outer end of one of the two sidewalls and having a second side connected to the radially outer end of the other of the two sidewalls, the crown comprising a radially outer tread (5), the tread comprising:
o at least one first sector (51) extending axially over a portion of the total width of the tread, extending circumferentially over the entire circumference of the tyre, and extending radially to a first sector contact face intended to come into contact with the roadway when the tyre is running, said first sector essentially consisting of a base material;
o at least one second sector (52) extending axially over a portion of the total width of the tread, extending circumferentially over the entire circumference of the tyre, and extending radially to a second sector contact face intended to come into contact with the roadway when the tyre is running, said second sector essentially consisting of a rigid reinforcing material, the dynamic shear modulus G* of which is at least two times greater than the dynamic shear modulus G* of the base material;
o a plurality of grooves (6) made starting from one of said contact faces intended to come into contact with the roadway when the tyre is running, each groove having groove sidewalls and a groove bottom, each groove having a depth P measured along a radial direction between the bottom and said contact face;
**characterized in that,** on the second sector or on one of the second sectors at least, the second sector contact face comprises a recess (7) having a depth p of less than 2 mm.

2. Tyre according to Claim 1, wherein all of the second sectors comprise a recess having a depth p of less than 2 mm.

3. Tyre according to Claim 1, wherein the recess has a depth p of between 0.1 mm and 1.5 mm.

4. Tyre according to Claim 1, wherein the recess has a depth p of between 0.2 mm and 0.8 mm.

5. Tyre according to one of Claims 1 to 4, wherein the recesses have different depths p between one sector and another.

6. Tyre according to one of Claims 1 to 5, wherein the recess has an inclined profile relative to the axis of rotation of the tyre.

7. Tyre according to one of Claims 1 to 5, wherein the recess has a curved profile.

8. Tyre according to one of Claims 1 to 5, wherein the recess has a stepped profile.

9. Tyre according to one of Claims 1 to 8, wherein the recess has an increasing depth p on going axially from the first sectors towards the second sectors.

10. Tyre according to one of Claims 1 to 9, wherein the recess is present on only a portion of the axial width of the face of the second sectors.

11. Tyre according to one of Claims 1 to 9, wherein the recess extends axially over the whole of the axial width of the second sectors and over a small portion of the first sectors.

12. Tyre according to one of Claims 1 to 11, wherein the reinforcing material is 10 times more rigid than the base material of the tread.

13. Tyre according to one of Claims 1 to 11, wherein the base material is based on an elastomer material having a dynamic shear modulus G*, at 60°C and under a 10 Hz alternating stress of 0.7 MPa, of less than 1.25 MPa.

14. Tyre according to one of Claims 1 to 12, wherein the rigid reinforcing material is based on an elastomer material having a dynamic shear modulus G*, measured at 60°C at 10 Hz and under an alternating shear stress of 0.7 MPa, of greater than 20 MPa.

15. Tyre according to one of Claims 1 to 13, wherein the rigid reinforcing material is visible on at least one of the groove sidewalls.
